# EUROPÄISCHE PATENTSCHRIFT

(11) **EP 0 658 415 B1**
(45) Veröffentlichungstag und Bekanntmachung des Hinweises auf die Patenterteilung: **20.05.1998**
(21) Anmeldenummer: 94119629.7
(22) Anmeldetag: 13.12.1994
(51) Int. Cl.: B29C 49/46

(54) **Verfahren zum Herstellen von Hohlkörpern aus thermoplastischem Kunststoff sowie Hohlkörper aus thermoplastischem Kunststoff**
Method for producing hollow objects made of thermoplastic material and hollow objects made of thermoplastic material
Procédé de fabrication d'objets creux en matière thermoplastique et objets creux en matière thermoplastique

(30) Priorität: 16.12.1993 DE 4343003
(43) Veröffentlichungstag der Anmeldung: 21.06.1995
(73) Patentinhaber: Kautex Textron GmbH & Co. KG., 53229 Bonn (DE)
(72) Erfinder: Karsch, Ulrich, D-53850 Niederkassel (DE)
(74) Vertreter: Koepsell, Helmut, Dipl.-Ing.

(56) Entgegenhaltungen:
- EP-A- 0 266 439
- EP-A- 0 500 166
- DE-A- 3 840 269
- US-A- 4 617 077
- US-A- 5 244 615

## Beschreibung

Die Erfindung betrifft ein Verfahren zur Herstellung von Hohlkörpern aus thermoplastischem Kunststoff durch Blasformen und Fluorieren gemäß dem Oberbegriff des Anspruches 1.

Es ist bekannt, Behälter aus thermoplastischem Kunststoff, insbesondere solche aus einem Polyolefin wie HDPE, mit einem Fluor enthaltenden Gasgemisch zu behandeln, um die Permeationseigenschaften der Wandung derartiger Behälter zu beeinflussen und sie für bestimmte Substanzen weniger durchlässig zu machen. Dieses Fluorieren wird insbesondere bei Kraftstofftanks angewendet, die in Kraftfahrzeugen eingebaut werden.

Durch die DE-OS 34,35,592 und die US-PS 4,617,077 ist ein Verfahren zum Herstellen von Hohlkörpern aus Kunststoff mittels Extrusionsblasformen und Fluorieren bekannt, bei welchem das für die Behandlung verwendete Gasgemisch sauerstofffrei ist. Ferner sind durch die DE-OS 36,37,459 und die DE-PS 38,40,269 Verfahren zur Verbesserung der Permeationseigenschaften von Behältern, die aus Polymeren von Ethylen oder Propylen bestehen, bekannt, bei denen das für die Behandlung benutzte Gasgemisch neben Fluor auch Sauerstoff enthält.

Die US-A-5 244 615 offenbart ein Verfahren, in dem eine mehrstufige Fluorgasbehandlung durchgeführt wird.

Wenngleich alle bekannten Verfahren zur Beeinflussung der Permeationseigenschaften von Wandungen von Kunststoffhohlkörpern unter Verwendung von Fluor, beispielsweise bei Kraftstofftanks, zu einer merklichen Verbesserung dieser Eigenschaften im Sinne einer Verringerung der Durchlässigkeit für Kraftstoffe bzw. Komponenten desselben aufweisen, ist es in Anbetracht der ständig strenger werdenden Anforderungen schwierig, die zukünftig noch zulässigen Werte bezüglich der pro Zeiteinheit durch Diffusion entweichenden Kraftstoffmengen bzw. Komponenten desselben einzuhalten. Dabei spielt auch die Zusammensetzung des Kraftstoffes eine erhebliche Rolle, da sich z.B. die Permeationseigenschaften von fluorierten Polymeren in Abhängigkeit vom Alkoholgehalt, insbesondere Methanolgehalt, des Kraftstoffs ändern. So nimmt die Durchlässigkeit solcher Wandungen bei Vorhandensein bestimmter Methanolanteile im Kraftstoff merklich zu mit dem Ergebnis, daß die in den meisten Ländern vorgeschriebenen Grenzwerte häufig nicht eingehalten werden können. Es wird angestrebt, die Permeation auch bei alkoholhaltigen Kraftstoffen auf sehr niedrige Werte, beispielsweise weniger als 0,3 g/24h pro Tank, abzusenken. Dies ist mit den heute üblichen Fluorierverfahren kaum zu erreichen. Erschwerend kommt hinzu, daß mit schwankender Zusammensetzung des Kraftstoffes gerechnet werden muß, beispielsweise derart, daß während der Lebensdauer eines üblichen Kraftfahrzeuges und des darin eingebauten Tankes Kraftstoffe mit unterschiedlichen Zusammensetzungen auch bezüglich des Alkoholanteils in den Tank eingefüllt werden.

Demzufolge liegt der Erfindung die Aufgabe zugrunde, das Verfahren der einleitend beschriebenen Art so zu verbessern, daß die vorerwähnten Nachteile zumindest erheblich verringert werden. Insbesondere wird angestrebt, auch bei alkoholhaltigen Kraftstoffen und bei unterschiedlichen Zusammensetzungen der auf dem Markt befindlichen Kraftstoffe, insbesondere bezüglich des Alkoholanteiles, so geringe Permeationswerte zu erreichen, daß sie den geltenden bzw. zu erwartenden Vorschriften genügen. Ferner wird angestrebt, diese Verbesserungen ohne ins Gewicht fallenden Mehraufwand zu ermöglichen. Insbesondere soll es möglich sein, das Verfahren gemäß der Erfindung auch unter Verwendung bereits existierender Anlagen anzuwenden.

Zur Lösung dieser Aufgabe schlägt die Erfindung vor, daß die fluorierende Behandlung in zwei Schritten durchgeführt wird derart, daß der Hohlkörper zunächst mit einem Gasgemisch behandelt werden, welches Fluor und Sauerstoff enthält. In einem zweiten Behandlungsschritt wird der Hohlkörper mit einem Fluor enthaltenden Gasgemisch behandelt, welches sauerstofffrei ist. Die Wandung eines so behandelten Hohlkörpers weist außerordentlich günstige Permeationseigenschaften insbesondere für Kraftstoffe auf, und zwar auch dann, wenn diese Alkohol, insbesondere Methanol, enthalten. Selbst dann, wenn auch bei gemäß dem Verfahren nach der Erfindung hergestellten Behältern die Permeation in Abhängigkeit von bestimmten im Kraftstoff enthaltenen Komponenten, beispielsweise Methanol, gewisse Änderungen erfährt, ist das Ausmaß derselben so gering, daß es im allgemeinen möglich ist, die zulässigen Permeationswerte nicht zu überschreiten.

Beide Behandlungsschritte können durchgeführt werden, solange sich der Hohlkörper noch in der Blasform befindet. Dabei ist es vorteilhaft, den Vorformling zunächst unter Verwendung eines Inertgases aufzuweiten, worauf der Innendruck abgesenkt und dann das Fluor und Sauerstoff enthaltende Reaktionsgasgemisch in den aufgeweiteten Behälter eingeführt wird. Dieser erste Behandlungschritt wird vorteilhaft bei einer Temperatur durchgeführt, die oberhalb der Kristallitschmelztemperatur des jeweiligen Polymers liegt. So kann im Falle von Polyethylen die Behandlung bei einer Temperatur von z. B. 150° C durchgeführt werden.

Nach dem ersten Behandlungsschritt wird der noch in der Blasform befindliche Behälter mit einem inerten Gas, beispielsweise Stickstoff, gespült, um so eine sauerstofffreie Atmosphäre herbeizuführen. Das Spülgas kann auch benutzt werden, um die Temperatur abzusenken, da es sich herausgestellt hat, daß der zweite Behandlungsschritt bei Anwendung niedrigerer Temperaturen zu besonders guten Ergebnissen führt. Alsdann wird in die so geschaffene Inertatmosphäre zur Durchführung des zweiten Behandlungsschrites Fluor eingegeben. Dabei kann beispielsweise so verfahren werden, wie es in der DE-OS 34,35.592 bzw. der US-PS 4,617,077 beschrieben ist.

Da es möglich, sogar vorteilhaft ist, den zweiten Behandlungsschritt bei Umgebungstemperatur durchzuführen, kann auch so verfahren werden, daß der zweite Behandlungsschritt zu einem späteren Zeitpunkt außerhalb der Blasform, also unabhängig vom Herstellen des eigentlichen Behälters, durchgeführt wird. Die optimale Verfahrensweise kann auch davon abhängen, aus welchem Polymer der Kunststoffbehälter besteht. Außer den Polymeren von Ehtylen können auch solche auch von Propylen unter Anwendung der Lehre gemäß der Erfindung behandelt werden.

Im allgemeinen wird es zweckmäßig sein, im zweiten Behandlungsschritt eine höhere Fluorkonzentration im Gasgemisch als beim ersten Behandlungsschritt vorzusehen. Es kann weiterhin zweckmäßig, ggf. sogar erforderlich sein, für den zweiten Behandlungsschritt eine längere Einwirkungsdauer des Reaktionsgasgemisches vorzusehen als im ersten Behandlungsschritt. Allerdings hängt dies in gewissem Umfang auch von der Fluorkonzentration im Gasgemisch ab. D.h., daß mit höherer Fluorkonzentration insbesondere im zweiten Behandlungsschritt die Einwirkungsdauer des Reaktonsgasgemisches zur Erzielung eines bestimmten Effektes kürzer sein kann.

In allen Fällen gilt, daß die durch den ersten Behandlungsschritt erzeugte Struktur der inneren Oberfläche des Behälters auch im zweiten Behandlungsschritt erhalten bleibt. Trotzdem führt die Kombination beider Behandlungsschritte in der beschriebenen Reihenfolge zu Permeationswerten, die insbesondere bei alkoholhaltigen Kraftstoffen mit dem bekannten Verfahren nicht erzielbar sind.

Obwohl beim Verfahren gemäß der Erfindung die im ersten Behandlungsschritt durch Anwendung eines Fluor und Sauerstoff enthaltenden Gasgemisches erzeugte verhältnismäßig ebene Oberfläche der Wandung einem zweiten Behandlungsschritt ausgesetzt wird, der normalerweise, also bei alleiniger Anwendung, zu einer mikroskopisch rauhen Oberfläche führt, bleibt die nach dem ersten Behandlungsschritt im allgemeinen vorhandene, im wesentlichen ebene Oberfläche auch nach dem zweiten Behandlungsschritt erhalten, und zwar mit dem überraschenden Ergebnis, daß die Wandung ihre im Sinne einer geringen Durchlässigkeit günstigen Permeationseigenschaften auch dann beibehält, wenn die Zusammensetzung des Kraftstoffes bei lediglich mit einem Fluor und Sauerstoff enthaltenden Gasgemisch behandelten Wandung zu einer verhältnismäßig großen Durchlässigkeit führte.

### Beispiel

Es wurden gleiche Kraftstoffbehälter aus Polyethylen, nämlich Lupolen 4261A der Firma BASF, unterschiedlichen Behandlungen unterzogen.

Im ersten Fall wurde der Behälter mit einem Fluor und Sauerstoff enthaltenden Gasgemisch bei einer Temperatur oberhalb der Kristallitschmelztemperatur des genannten Polyethylens behandelt.

Im zweiten Fall wurde der Behälter mit einem Fluor enthaltenden, jedoch sauerstofffreien Gasgemisch oberhalb der Kristallitschmelztemperatur behandelt.

Im dritten Fall erfolgte die Behandlung unter Anwendung des Verfahrens gemäß der Erfindung, wobei für den ersten Behandlungsschritt die Bedingungen bezüglich Sauerstoff- und Fluorgehalt und Temperatur eingestellt wurden, die auch bei den Versuchen mit nur einem Behandlungsschritt gemäß Fall 1 zur Anwendung kamen. Beim zweiten Behandlungsschritt erfolgte die Behandlung unter den Bedingungen der Versuche gemäß Fall 2, jedoch bei einer Temperatur unterhalb der Kristallitschmelztemperatur.

Die jeweils zur Anwendung kommenden Gasgemische enthielten neben Fluor bzw. Fluor und Sauerstoff Stickstoff als Inertgas. Die durchschnittliche Wandstärke aller getesteten Behälter betrug 4 mm.

Die nach der jeweiligen Behandlung durchgeführten Bestimmungen der Durchlässigkeitswerte wurden mit einem Kraftstoffgemisch M15, also einem Kraftstoff mit einem Methanolgehalt von 15%, durchgeführt.

Dabei ergaben sich folgende Permeationswerte:
Fall 1 (Behandlung mit einem Fluor und Sauerstoff enthaltenden Gasgemisch): 4,5 g/24h.
Fall 2 (Behandlung mit einem Fluor enthaltenden, jedoch sauerstofffreien Gasgemisch): 2 g/24h.
Fall 3 (zweistufiges Behandlungsverfahren): 0,2 g/24h.

## Patentansprüche

1. Verfahren zum Herstellen von Hohlkörpern aus einem thermoplastischen Kunststoffpolymer durch Blasformen und Fluorieren, bei welchem ein vorzugsweise schlauchförmiger Vorformling gebildet und innerhalb einer Blasform unter Verwendung eines gasförmigen Druckmittels bis zur Anlage an der Innenkontur der Blasform aufgeweitet und die Innenwandung des resultierenden Hohlkörpers innerhalb der Blasform durch ein Gas oder Gasgemisch, von dem wenigstens eine Komponente mit dem die Hohlkörperwandung bildenden Kunststoff reagiert, um diese für wenigstens eine Substanz weniger durchlässig zu machen, behandelt wird, dadurch gekennzeichnet, daß in einem ersten Behandlungsschritt die Hohlkörperwandung mit einem Gasgemisch behandelt wird, welches Fluor und Sauerstoff enthält und danach in einem zweiten Behandlungsschritt der Hohlkörper mit einem Gasgemisch behandelt wird, welches Fluor, jedoch keinen Sauerstoff, enthält.

2. Verfahren nach Anspruch 1, dadurch gekennzeichnet, daß die beiden Behandlungschritte unmittelbar aufeinanderfolgend durchgeführt werden.

3. Verfahren nach Anspruch 2, dadurch gekennzeichnet, daß zwischen dem ersten Behandlungsschritt und dem zweiten Behandlungsschritt der Hohlkörper mit einem Inertgas zum Entfernen zumindest des Sauerstoffes aus dem Hohlkörper gespült wird.

4. Verfahren nach Anspruch 1, dadurch gekennzeichnet, daß der Fluoranteil im Behandlungsgas während des zweiten Behandlungsschrittes größer ist als während des ersten Behandlungsschrittes.

5. Verfahren nach Anspruch 1, dadurch gekennzeichnet, daß die Einwirkungsdauer des Gasgemisches während des zweiten Behandlungsschrittes länger ist als während des ersten Behandlungsschrittes.

6. Verfahren nach Anspruch 1, dadurch gekennzeichnet, daß der Behälter zwischen dem ersten Behandlungsschritt und dem zweiten Behandlungsschritt abgekühlt wird.

7. Verfahren nach Anspruch 1, dadurch gekennzeichnet, daß der erste Behandlungsschritt bei Temperaturen oberhalb der Kristallitschmelztemperatur des Polymers durchgeführt wird.

8. Verfahren nach Anspruch 1, dadurch gekennzeichnet, daß die Behandlung im ersten Behandlungsschritt unter Verwendung eines Gasgemisches erfolgt, welches 0,01 bis 5 Vol.-% Fluor enthält.

9. Verfahren nach Anspruch 1, dadurch gekennzeichnet, daß die Behandlung im ersten Behandlungsschritt mit einem Gasgemisch erfolgt, welches 0,5 bis 25 Vol.-% Sauerstoff enthält.

10. Verfahren nach Anspruch 1, dadurch gekennzeichnet, daß die Einwirkungsdauer des Gasgemisches während des ersten Behandlungsschrittes 5 bis 60 sec. beträgt.

11. Verfahren nach Anspruch 1, dadurch gekennzeichnet, daß der zweite Behandlungsschritt mit einem Gasgemisch erfolgt, welches lediglich Fluor und Inertgas enthält.

12. Verfahren nach Anspruch 1, dadurch gekennzeichnet, daß der zweite Behandlungsschritt bei Temperaturen unterhalb der Kristallitschmelztemperatur des Polymers durchgeführt wird.

13. Verfahren nach Anspruch 12, dadurch gekennzeichnet, daß der zweite Verfahrensschritt bei Raumtemperatur durchgeführt wird.

14. Verfahren nach Anspruch 1, dadurch gekennzeichnet, daß die Behandlung im zweiten Behandlungsschritt unter Verwendung eines Gasgemisches erfolgt, welches 0,5 bis 20 Gew.-% Fluor enthält.

15. Verfahren nach Anspruch 1, dadurch gekennzeichnet, daß die Einwirkungsdauer des Gasgemisches während des zweiten Behandlungsschrittes 10 sec. bis 120 min. beträgt.

16. Verfahren nach Anspruch 1, dadurch gekennzeichnet, daß der erste Behandlungschritt innerhalb der Blasform durchgeführt wird.

17. Verfahren nach Anspruch 1, dadurch gekennzeichnet, daß der zweite Behandlungsschritt innerhalb der Blasform durchgeführt wird.

18. Verfahren nach Anspruch 1, dadurch gekennzeichnet, daß der zweite Behandlungssschritt außerhalb der Blasform durchgeführt wird.

19. Verfahren nach Anspruch 1, dadurch gekennzeichnet, daß der Vorformling unter Verwendung eines Gases oder Gasgemisches aufgeweitet wird, welches kein Fluor enthält.

20. Im Extrusions-Blasverfahren hergestellter Hohlkörper, insbesondere Kraftstofftank, der wenigstens überwiegend aus einem thermoplastischem Kunststoffpolymer, insbesondere von Ethylen oder Propylen besteht, dadurch gekennzeichnet, daß die Beschaffenheit der inneren Oberfläche des Hohlkörpers durch Behandlung zunächst mit einem Gasgemisch, welches Fluor und Sauerstoff enthält und danach einem zweiten Behandlungsschritt mit einem Gasgemisch, welches Fluor enthält, jedoch sauerstofffrei ist, entstanden ist.

## Claims

1. A process for the production of hollow bodies from a thermoplastic synthetic polymer by blow moulding and fluorination, in which a preferably tubular preform is formed and expanded within a blow moulding mould using a gaseous pressure agent until it bears against the internal contour of the blow moulding mould and the internal wall of the resulting hollow body is treated within the blow moulding mould by a gas or gas mixture of which at least one component reacts with the synthetic material forming the hollow body wall in order to make it less permeable in relation to at least one substance, characterised in that in a first treatment step the hollow body wall is treated with a gas mixture which contains fluorine and oxygen and thereafter in a second treatment step the hollow body is treated with a gas mixture which contains fluorine but no oxygen.

2. A process according to claim 1 characterised in that the two treatment steps are effected in immediate succession.

3. A process according to claim 2 characterised in that between the first treatment step and the second treatment step the hollow body is purged with an inert gas for removing at least the oxygen from the hollow body.

4. A process according to claim 1 characterised in that the fluorine content in the treatment gas during the second treatment step is greater than during the first treatment step.

5. A process according to claim 1 characterised in that the period of action of the gas mixture during the second treatment step is longer than during the first treatment step.

6. A process according to claim 1 characterised in that the container is cooled between the first treatment step and the second treatment step.

7. A process according to claim 1 characterised in that the first treatment step is carried out at temperatures above the crystallite fusion temperature of the polymer.

8. A process according to claim 1 characterised in that the treatment in the first treatment step is effected using a gas mixture which contains 0.01 to 5% by volume of fluorine.

9. A process according to claim 1 characterised in that the treatment in the first treatment step is effected with a gas mixture which contains 0.5 to 25% by volume of oxygen.

10. A process according to claim 1 characterised in that the period of action of the gas mixture during the first treatment step is from 5 to 60 seconds.

11. A process according to claim 1 characterised in that the second treatment step is carried out with a gas mixture which contains only fluorine and inert gas.

12. A process according to claim 1 characterised in that the second treatment step is carried out at temperatures below the crystallite fusion temperature of the polymer.

13. A process according to claim 12 characterised in that the second treatment step is carried out at ambient temperature.

14. A process according to claim 1 characterised in that the treatment in the second treatment step is carried out using a gas mixture which contains from 0.5 to 20% by weight of fluorine.

15. A process according to claim 1 characterised in that the period of action of the gas mixture during the second treatment step is from 10 seconds to 120 minutes.

16. A process according to claim 1 characterised in that the first treatment step is carried out within the blow moulding mould.

17. A process according to claim 1 characterised in that the second treatment step is carried out within the blow moulding mould.

18. A process according to claim 1 characterised in that the second step is carried out outside the blow moulding mould.

19. A process according to claim 1 characterised in that the preform is expanded using a gas or gas mixture which contains no fluorine.

20. A hollow body produced by an extrusion blow moulding process, in particular a fuel tank, which at least predominantly comprises a thermoplastic synthetic polymer, in particular of ethylene or propylene, characterised in that the nature of the internal surface of the hollow body is produced by treatment firstly with a gas mixture which contains fluorine and oxygen and thereafter in a second treatment step with a gas mixture which contains fluorine but which is oxygen-free.

## Revendications

1. Procédé pour fabriquer des corps creux en matière polymère thermoplastique, moulés par soufflage et traités au fluor, à partir d'une ébauche de préférence tubulaire transformée par expansion à l'intérieur d'un moule de soufflage sous l'effet d'un courant de gaz sous pression qui applique la paroi de l'ébauche contre celle du moule, la face interne du corps creux ainsi obtenu étant ensuite soumise dans le moule à l'effet d'un gaz ou d'un mélange gazeux dont au moins un composant réagit avec la matière plastique de la paroi du corps creux, afin de réduire la perméabilité de cette paroi à l'égard d'au moins une substance, *caractérisé* en ce qu'on effectue ce traitement de la paroi du corps creux en opérant d'abord, dans une première phase, avec un mélange gazeux contenant du fluor et de l'oxygène, et ensuite, dans une deuxième phase, avec un autre mélange gazeux qui contient du fluor mais pas d'oxygène.

2. Procédé selon la revendication 1, *caractérisé* en ce qu'on réalise les deux phases du traitement immédiatement l'une après l'autre.

3. Procédé selon la revendication 2, *caractérisé* en ce que, entre la première phase et la seconde phase du traitement du corps creux, on lave celui-ci avec un gaz inerte pour en enlever au moins l'oxygène.

4. Procédé selon la revendication 1, *caractérisé* en ce que la teneur en fluor du gaz de traitement utilisé pendant la deuxième phase est supérieure à la teneur en fluor du gaz utilisé pendant la première phase du traitement.

5. Procédé selon la revendication 1, *caractérisé* en ce que la durée d'action du mélange gazeux de la deuxième phase du traitement est supérieure à celle de la première phase.

6. Procédé selon la revendication 1, *caractérisé* en ce qu'on refroidit le corps creux entre la première phase et la deuxième phase du traitement.

7. Procédé selon la revendication 1, *caractérisé* en ce qu'on effectue la première phase du traitement à une température supérieure à la température de fusion des cristallites de la matière polymère.

8. Procédé selon la revendication 1, *caractérisé* en ce que, pour la première phase du traitement, on utilise un mélange gazeux dont la teneur volumétrique en fluor est comprise entre 0,01% et 5%.

9. Procédé selon la revendication 1, caractérisé en ce que, pour la première phase du traitement, on utilise un mélange gazeux ayant une teneur volumétrique en oxygène comprise entre 0,5% et 25%.

10. Procédé selon la revendication 1, *caractérisé* en ce que, dans la première phase du traitement, on fait agir le mélange gazeux de traitement pendant une durée comprise entre 5 et 60 secondes.

11. Procédé selon la revendication 1, *caractérisé* en ce qu'on effectue la deuxième phase du traitement avec un mélange gazeux qui contient uniquement du fluor et un gaz inerte.

12. Procédé selon la revendication 1, *caractérisé* en ce qu'on effectue la deuxième phase du traitement à des températures inférieures à la température de fusion des cristallites de la matière polymère.

13. Procédé selon la revendication 12, *caractérisé* en ce qu'on effectue la deuxième phase du traitement à la température ambiante de l'atelier.

14. Procédé selon la revendication 1, *caractérisé* en ce que, pour la deuxième phase du traitement, on utilise un mélange gazeux dont la teneur pondérale en fluor est comprise entre 0,5% et 20%.

15. Procédé selon la revendication 1, *caractérisé* en ce que, pour la deuxième phase du traitement, on fait agir le mélange gazeux pendant une durée comprise entre 10 secondes et 120 minutes.

16. Procédé selon la revendication 1, *caractérisé* en ce que, pour la première phase du traitement, on opère à l'intérieur du moule de soufflage.

17. Procédé selon la revendication 1, *caractérisé* en ce que, pour la deuxième phase du traitement, on opère à l'intérieur du moule de soufflage.

18. Procédé selon la revendication 1, *caractérisé* en ce que, pour la deuxième phase du traitement, on opère à l'extérieur du moule de soufflage.

19. Procédé selon la revendication 1, *caractérisé* en ce que, pour assurer l'expansion de l'ébauche, on utilise un gaz ou un mélange gazeux qui ne contient pas de fluor.

20. Corps creux moulé, réalisé par extrusion-soufflage, tel en particulier qu'un réservoir de carburant, constitué principalement de matière polymère thermoplastique, en particulier à base d'éthylène ou de propylène, *caractérisé* en ce que la face interne de ce corps creux présente une qualité spéciale obtenue par un traitement effectué dans une première phase au moyen d'un mélange gazeux contenant du fluor et de l'oxygène, et ensuite, dans une deuxième phase, au moyen d'un autre mélange gazeux qui contient du fluor mais pas d'oxygène.
